Europäisches Patentamt

European Patent Office

Office européen des brevets

(19)

(11) Veröffentlichungsnummer: **0 139 625**
**A1**

(12) # EUROPÄISCHE PATENTANMELDUNG

(21) Anmeldenummer: **84890148.4**

(22) Anmeldetag: **02.08.84**

(51) Int. Cl.⁴: **G 11 B 23/28**
**G 11 B 5/62**

(30) Priorität: **11.08.83 AT 2908/83**

(43) Veröffentlichungstag der Anmeldung:
**02.05.85 Patentblatt 85/18**

(84) Benannte Vertragsstaaten:
**BE CH DE FR GB IT LI LU NL SE**

(71) Anmelder: **Seidl, Heinz**
**Reinprechtsdorfer Strasse 17/2/5**
**A-1050 Wien V(AT)**

(72) Erfinder: **Seidl, Heinz**
**Reinprechtsdorfer Strasse 17/2/5**
**A-1050 Wien V(AT)**

(74) Vertreter: **Krause, Ernst, Dipl.-Ing. et al,**
**Krause, Ernst, Dipl.-Ing. Casati, Wilhelm, Dipl.-Ing P.O.**
**Box 234 Amerlingstrasse 8**
**A-1061 Wien VI(AT)**

(54) **Magnetogrammträger.**

(57) Gegenstand der Erfindung ist ein Magnetogrammträger, bei dem zwischen einer Trägerfolie 1 und der magnetisierbaren Schicht 3 eine Kennzeichnung 2 eingetragen ist. Solcherart kann die Herkunft des Magnetogrammträgers unentfernbar gekennzeichnet werden.

Fig. 1

EP 0 139 625 A1

## Magnetogrammträger

Die Erfindung bezieht sich auf einen Magnetogrammträger mit einer Trägerfolie und einer damit verbundenen magnetisierbaren Schicht.

Es ist bekannt, daß Magnetogrammträger der verschiedensten Fabrikate und des unterschiedlichsten chemischen Aufbaues sich äußerlich voneinander nur schwer unterscheiden lassen und dadurch auch hinsichtlich des Inhalts schwer ein Unterschied zwischen einer legalen und einer illegalen Aufzeichnung festgestellt werden kann. Diese Schwierigkeiten wurden bisher besonders im Video-Bereich von Raubkopierern genützt, weil sie im Gegensatz zum legitimen Software-Hersteller keine Entschädigungen an die Urheber zahlen und dadurch billiger verkaufen können.

In der DE-OS 2 520 652 wird eine Vorrichtung zum Markieren von fotografischen Aufzeichnungsträgern beschrieben. Dabei wird ein Filmstreifen mit einem Stempel markiert. Dies kann chemisch mit Farbe oder mechanisch durch das Aufbringen von Reliefmarken erfolgen.

Die bekannte Vorgangsweise bietet keine befriedigende Lösung, da ein unmarkierter Magnetogrammträger nachträglich gekennzeichnet werden kann. Vorhandene mechanische Prägungen sind durch Umprägen, Auspressen oder Ausbügeln entfernbar. Chemische Markierungen können mit Lösungsmitteln entfernt werden.

Der Erfindung liegt die Aufgabe zugrunde, bespielte Magnetogrammträger vor kommerziellem Mißbrauch zu schützen und die verschiedensten Produkte eindeutiger unterscheidbar zu gestalten. Erreicht wird dies gemäß der Erfindung, wenn zur unentfernbaren Kennzeichnung der Herkunft des Magnetogrammträgers, die vorzugsweise nicht magnetisierbare Kennzeichnung auf der Trägerfolie, auf der, der magnetisierbaren Schicht zugewandten Seite, vor Aufbringen der magnetisierbaren Schicht, eingetragen ist. Durch die Erfindung wird sohin ein Magnetogrammträger geschaffen, bei dem zwischen der Trägerfolie und der magnetisierbaren Schicht eine Markierung eingetragen ist.

0139625

Die Erfindung ermöglicht solcherart mit zusätzlich auf dem Magnetogrammträger angebrachten, nicht magnetisierbaren Zeichen eine leichtere Feststellung, ob eine Originalaufzeichnung oder eine gefälschte Magnetaufzeichnung vorliegt. Durch die Erfindung ist der Magnetogrammträger als Original gekennzeichnet. Damit kann es gelingen, im Video-Bereich den Marktanteil an Fälschungen zu verkleinern. Die Erfindung läßt sich in gleicher Weise auch auf Computer-Programme anwenden, die auf Magnetogrammträgern gespeichert werden. Dazu können die Software-Hersteller mit den Magnetogrammträger-Herstellern Verträge abschließen, die den Magnetogrammträger-Hersteller verpflichtet, erfindungsgemäße Magnetogrammträger nur dem offiziellen Auftraggeber und Software-Hersteller zu verkaufen. Für den Raubkopierer wird nämlich, selbst für Kleinserien, eine Selbstanfertigung erfindungsgemäßer Magnetogrammträger zu aufwendig.

Die Erfindung wird nachstehend anhand der Zeichnung beispielsweise näher erläutert. Es zeigen,

Fig. 1 im Schnitt einen erfindungsgemäß ausgebildeten Magnetogrammträger,

Fig. 2 einen Schnitt durch eine Trägerfolie und

Fig. 3 eine mit nichtmagnetisierbaren Zeichen versehene Trägerfolie vor dem Aufbringen der magnetisierbaren Schicht.

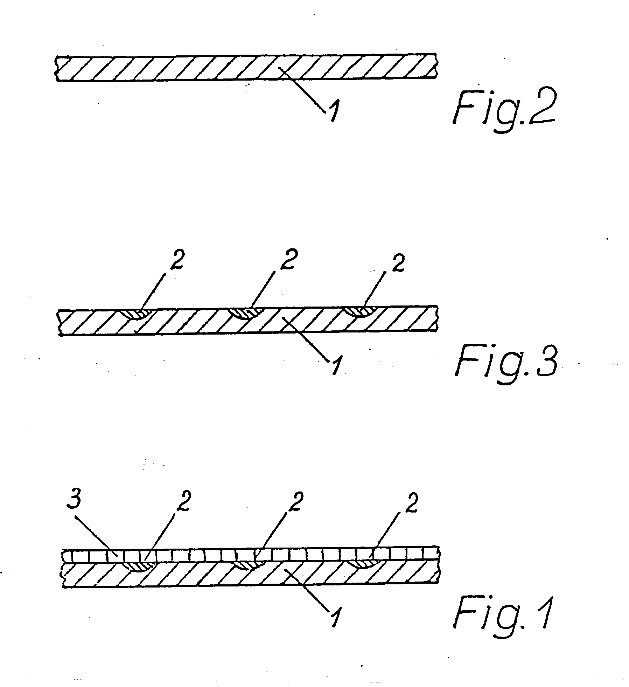

Durch den Magnetogrammträger-Hersteller kann im Auftrag eines offiziellen Software-Herstellers, eine Trägerfolie 1 gemäß Fig. 2 an der, im fertigen Magnetogrammträger der magnetisierbaren Schicht 3 zugewandten Seite, bevor diese magnetisierbare Schicht 3 angebracht wird, erfindungsgemäß mit den gewünschten vorzugsweise nicht magnetisierbaren Zeichen 2 versehen werden (Fig. 3). Die Kennzeichen 2 können mehrmals auf der gesamten Fläche der Trägerfolie 1 eingetragen oder durch Diffusion eingebracht werden. Auf der mit der Kennzeichnung 2 versehenen Trägerfolie 1 wird als letztes die magnetisierbare Schicht 3 angebracht, womit die Kennzeichnung 2 zwischen Trägerfolie 1 und magnetisierbarer Schicht 3 unentfernbar eingebettet ist (Fig. 1). Eine nachträgliche
Kennzeichnung ist nicht mehr möglich.

Als Kennzeichen können Farbmittel verwendet werden,
die entweder unter einer bestimmten elektromagnetischen
Frequenz oder einer bestimmten Temperatur sichtbar werden, z. B. Thermocolorstoffe, die bei bestimmten Temperaturen einen Farbumschlag bzw. eine Farbreaktion zeigen, oder fluoreszierende Farbstoffe, die z. B. bei
Ultraviolettlicht aufleuchten. Die Kennzeichnung kann
auch durch in die Trägerfolie eindiffundierte chemische
Substanzen gebildet werden, was den Vorteil einer einfachen Herstellung mit sich bringt. Die Kennzeichnung
kann jedoch auch aus einem Einbuchtungen in der Trägerfolie ausfüllenden Stoff bestehen.

Als Trägerfolie kann eine lichtpolarisierende Folie verwendet werden, die eine zusätzliche Möglichkeit
bietet, einen Magnetogrammträger als Original zu kennzeichnen. Die Überprüfung der Polarisationsfolie kann
durch Auflegen und Verdrehen eines Polarisationsfilters erfolgen. Zwischen dem Bereich von maximaler
Helligkeit, und dadurch Lesbarkeit der eingebetteten
Kennzeichnung, und der Dunkelheit würde ein Winkel von
90 Grad liegen.

## Patentansprüche <span style="float:right">0139625</span>

1. Magnetogrammträger mit einer Trägerfolie und einer damit verbundenen magnetisierbaren Schicht, dadurch gekennzeichnet, daß zur unentfernbaren Kennzeichnung der Herkunft des Magnetogrammträgers, die vorzugsweise nicht magnetisierbare Kennzeichnung (2) auf der Trägerfolie (1), auf der, der magnetisierbaren Schicht (3) zugewandten Seite, vor Aufbringen der magnetisierbaren Schicht (3), eingetragen ist.

2. Magnetogrammträger nach Anspruch 1, dadurch gekennzeichnet, daß die Kennzeichnung durch in die Trägerfolie (1) eindiffundierte chemische Substanzen gebildet ist.

3. Magnetogrammträger nach Anspruch 1, dadurch gekennzeichnet, daß die Kennzeichnung (2) aus einem Einbuchtungen in der Trägerfolie (1) ausfüllenden Stoff besteht.

4. Magnetogrammträger nach einem der Ansprüche 1 bis 3, dadurch gekennzeichnet, daß die Trägerfolie (1) eine, das Licht polarisierende Folie ist.

1/1

Fig.2

Fig.3

Fig.1

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 016 677 (F.I.L.P.; M.C.T) * Seite 4, Zeile 24 - Seite 5, Zeile 8 * | 1 | G 11 B 23/28 G 11 B 5/62 |
| A | DE-A-2 820 140 (PHILIPS) * Seite 2, Zeile 4 - Seite 4, Zeile 3 * | 1 | |
| A | DE-A-2 545 580 (EMI) * Seite 9, Zeile 9 - Seite 11, Zeile 16 * | 1 | |
| A | US-A-4 244 998 (A.L. SMITH) * Spalte 1, Zeile 1 - Spalte 2, Zeile 20 * | | RECHERCHIERTE SACHGEBIETE (Int. Cl.4) |
| D,A | DE-A-2 520 652 (AGFA-GEVAERT) | | G 11 B 5/00 G 11 B 23/00 G 11 B 27/00 G 06 K 19/08 |

Der vorliegende Recherchenbericht wurde für alle Patentansprüche erstellt.

| Recherchenort | Abschlußdatum der Recherche | Prüfer |
|---|---|---|
| BERLIN | 06-11-1984 | ROGNONI M.G.L. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82